# EUROPÄISCHE PATENTSCHRIFT

(11) **EP 2 663 763 B1**
(45) Veröffentlichungstag und Bekanntmachung des Hinweises auf die Patenterteilung: **10.12.2014**
(21) Anmeldenummer: 11813679.5
(22) Anmeldetag: 30.12.2011
(51) Int. Cl.: F02M 55/00, F02M 59/44, F16L 37/00, F16L 41/08

(54) **PUMPE, INSBESONDERE FÜR EIN KRAFTSTOFFEINSPRITZSYSTEM EINER BRENNKRAFTMASCHINE**
PUMP, IN PARTICULAR FOR A FUEL INJECTION SYSTEM OF AN INTERNAL COMBUSTION ENGINE
POMPE, EN PARTICULIER POUR UN SYSTÈME D'INJECTION DE CARBURANT D'UN MOTEUR À COMBUSTION INTERNE

(30) Priorität: 14.01.2011 DE 102011002697
(43) Veröffentlichungstag der Anmeldung: 20.11.2013
(73) Patentinhaber: Robert Bosch GmbH, 70442 Stuttgart (DE)
(72) Erfinder: KUNZ, Markus, 70839 Gerlingen (DE); MAIER, Eberhard, 73257 Koengen (DE); SCHOLZ, Frank, 70469 Stuttgart-Feuerbach (DE)
(86) Internationale Anmeldenummer: PCT/EP2011/074292
(87) Internationale Veröffentlichungsnummer: WO 2012/095269

(56) Entgegenhaltungen:
- WO-A1-98/27334
- WO-A1-02/077438
- WO-A1-2008/129001
- DE-A1- 2 918 642
- DE-A1- 10 227 604
- DE-A1- 19 749 180

## Beschreibung

Die Erfindung betrifft eine Pumpe, insbesondere für ein Kraftstoffeinspritzsystem einer Brennkraftmaschine gemäß dem Oberbegriff des Anspruchs 1.

Eine solche Pumpe ist durch die WO 2008/129001 A1 bekannt. Diese Pumpe ist mit einem Hochdruckbereich und einem Niederdruckbereich verschaltet. Der Niederdruckbereich weist eine Zulaufleitung und eine Rücklaufleitung auf, die über Stutzen mit der Pumpe verschaltet sind. Die Stutzen sind in je eine Zulauföffnung und eine Rücklauföffnung an der Pumpe dichtend eingesetzt. Die Stutzen sind aus einem Kunststoffwerkstoff gefertigt und mittels eines Federrings in der jeweiligen Öffnung verriegelt. Dies erfordert einen großen Herstellaufwand.

Durch die DE 29 18 642 A1 ist eine Pumpe bekannt, bei der ein Stutzen einer Zulaufleitung aus einem Kunststoffwerkstoff gefertigt ist. Der Stutzen ist in eine Öffnung der Pumpe dichtend eingepresst und in seinem in die Öffnung eingesetzten Bereich von einer aus einem metallischen Werkstoff gefertigten Hülse umgeben.

Die Pumpe mit den Merkmalen des Anspruchs 1 hat demgegenüber den Vorteil, dass der Stutzen mit der Hülse einfach herstellbar ist und auf einfache Weise, beispielsweise durch Einpressen, in der Öffnung der Pumpe befestigt werden kann. Durch die Verdrehsicherung ist sichergestellt, dass der Stutzen, der beispielsweise als 90°-Winkelstutzen ausgebildet sein kann, nicht gegenüber der Hülse durch äußere Kraftsteinwirkung verdreht werden kann und somit die gedichtete Verbindung zwischen dem Stutzen und der Hülse beschädigt werden kann.

In Weiterbildung der Erfindung ist der Stutzen in die Hülse eingespritzt. Dies stellt die bevorzugte Ausführungsvariante dar, wobei aber auch andere Verbindungsarten im Rahmen der Erfindung denkbar und umsetzbar sind. Ein Einspritzen des Stutzens in die Hülse ist gut umsetzbar, wenn die Hülse, wie in Weiterbildung vorgesehen ist, eine Metallhülse ist. Dabei kann der metallische Werkstoff beispielsweise Aluminium sein, wobei eine aus Aluminiumwerkstoff hergestellte Hülse einerseits kostengünstig realisierbar ist, andererseits eine ausreichende Haltbarkeit und weiterhin zum Herstellen einer dauerhaltbaren Pressverbindung mit der Zulauföffnung beziehungsweise der Ablauföffnung eine genügend hohe Haltekraft aufweist.

In weiterer Ausgestaltung der Erfindung weist die Hülse einen Einpressbund auf. Dieser Einpressbund ist so ausgelegt, dass bei beliebiger Ausgestaltung des Stutzens ein möglichst einheitliches Presswerkzeug auf den Einpressbund aufgesetzt werden kann, mit dessen Hilfe dann der Verbund aus Stutzen und Hülse in die Zulauföffnung beziehungsweise der Ablauföffnung eingepresst wird. Dieser Pressverbund zwischen der Hülse und der Zulauföffnung beziehungsweise der Ablauföffnung kann so ausgelegt sein, dass dieser neben der Haltefunktion auch eine Dichtfunktion wahrnimmt. Bevorzugt weist der Stutzen und/oder die Hülse in dem in die Zulauföffnung beziehungsweise der Ablauföffnung eingesetzten Bereich eine Ringnut zur Aufnahme eines Dichtrings auf. Diese Ausgestaltung hat den Vorteil, dass die Haltefunktion von der Dichtfunktion getrennt wird und dadurch geringere Anforderungen beispielsweise die Oberflächengüte der Hülse bestehen, da die Abdichtung nicht von dem Pressverbund, sondern von dem Dichtring, der insbesondere ein Runddichtring ist, übernommen wird. Dadurch wird eine Kostenersparnis bei dem Material für die Hülse erzielt, weiterhin bestehen geringere Anforderungen an die Oberflächengüte und Außentoleranzen der Hülse. Auch wird die Ausschussrate beim Einpressen der Stutzen verringert, da die Pressung durch den Entfall der Abdichtfunktion mit geringerem Aufwand durchgeführt werden kann. Schließlich wird die Gefahr eines Partikeleintrags in den Pumpeninnenraum verringert, da Partikel, welche durch den Einpressvorgang des Stutzens durch Ablösung von Metallteilen entstehen können, durch den umfassenden Dichtring nicht in den Pumpeninnenraum der Pumpe gelangen können. Die Ringnut ist bevorzugt an dem pumpenseitigen Endbereich der Hülse angeordnet. Wiederum bevorzugt ist die Ringnut angrenzend an die Hülse in den Stutzen eingelassen. Dies stellt eine besonders vorteilhafte Ausgestaltung dar, die bei dem Einspritzvorgang durch entsprechende Ausgestaltung des Werkzeugs quasi ohne Mehraufwand umsetzbar ist. Denkbar ist es aber auch, die Nut in die Hülse einzuarbeiten oder bei der Herstellung der Hülse in diese einzugießen.

Die Verdrehsicherung ist in weiterer Ausgestaltung durch eine Verzahnung oder eine Quernut gebildet. Eine Verzahnung ist bevorzugt axial zwischen der Hülse und dem Stutzen angeordnet, während eine oder mehrere Quernuten stirnseitig in die Hülse eingearbeitet bzw. bevorzugt eingegossen sind und bei dem Einspritzvorgang des Stutzens von Kunststoff ausgefüllt werden. Der Werkstoff für den Kunststoff kann ein reiner Kunststoff ohne Zusätze sein, es ist aber auch ein passendes Faser-Kunststoff-System zur Herstellung eines entsprechenden Verbunds im Rahmen der Erfindung einsetzbar. Dabei ist in weiterer Ausgestaltung der Erfindung vorgesehen, dass der Stutzen auf der der Hülse abgewandten Seite eine Kundenschnittstelle aufweist. An dieser Kundenschnittstelle, die beispielsweise als SAE-Schnittstelle ausgebildet sein kann, kann der Kunde, insbesondere ein Motorenhersteller, die weiterführende Zulaufleitung bzw. Rücklaufleitung anschließen.

Weitere vorteilhafte Ausgestaltungen der Erfindung sind der Zeichnungsbeschreibung zu entnehmen, in der ein in den Fig. dargestelltes Ausführungsbeispiel der Erfindung beschrieben ist.

### Kurzbeschreibung der Zeichnungen

Es zeigen:
- Fig. 1: eine perspektivische Ansicht einer Hochdruckpumpe mit angebauten Stutzen zum Anschluss einer Zulaufleitung und einer Rücklaufleitung und
- Fig. 2: eine perspektivische Ansicht eines erfindungsgemäß eines in eine Hülse eingespritzten Stutzens.

### Ausführungsform der Erfindung

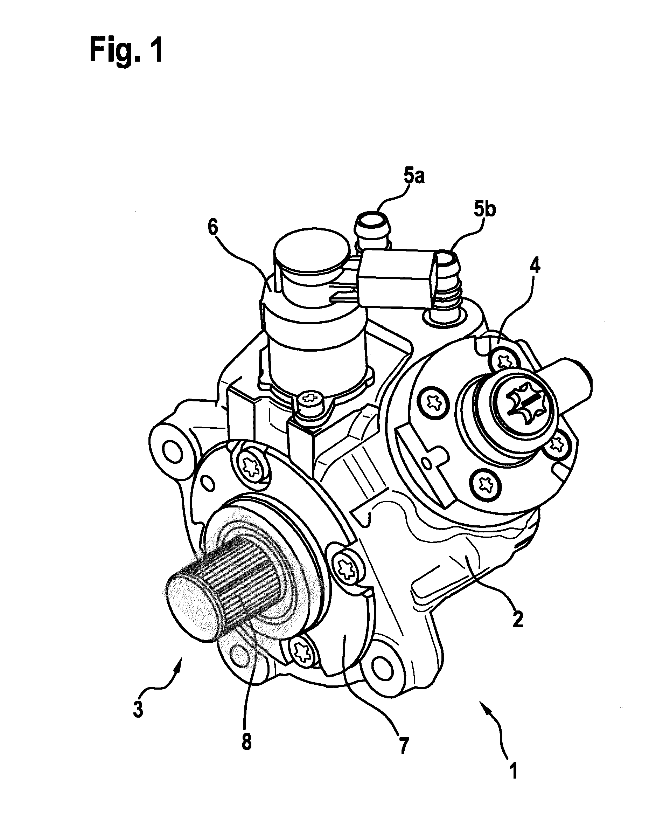

Fig. 1 zeigt eine Hochdruckpumpe 1 mit einem Pumpengehäuse 2, in dem eine Pumpenwelle 3 drehbar gelagert ist. Die Pumpenwelle 3 ist als Pumpennockenwelle ausgelegt und mit einer Kolbenzylindereinheit 4 über Rollenstößel verschaltet. In der Kolbenzylindereinheit 4 wird der von einer Vordruckpumpe aus einem Kraftstofftank über eine Zulaufleitung, die über einen Stutzen 5a für den Zulauf mit der Hochdruckpumpe 1 verbunden ist, zugeführte Kraftstoff auf einen Druck von bis zu 3.000 bar verdichtet und über eine Hochdruckleitung in einen Hochdruckspeicher eines Common-Rail-Einspritzsystems gefördert. Von dort wird der Kraftstoff über Einspritzleitungen und Kraftstoffinjektoren in zugeordnete Brennräume einer Brennkraftmaschine gesteuert eingespritzt.

Die Menge des von der Hochdruckpumpe 1 über den Hochdruckanschluss in den Hochdruckspeicher geförderten Kraftstoffs wird über eine in einen Niederdruckbereich der Hochdruckpumpe 1 eingeschaltete Zumesseinheit 6 festgelegt, wobei von der Zumesseinheit abgesteuerter Kraftstoff über eine Rückführleitung, die mit einem Stutzen 5b für den Rücklauf mit der Hochdruckpumpe 1 verbunden ist, in den Kraftstofftank des Kraftstoffeinspritzsystems zurückgeführt wird. Über diese Rückführleitung wird auch der Kraftstoff, der zur Schmierung der Lagerstellen der Pumpennockenwelle benötigt wird oder zur Kühlung der Hochdruckpumpe 1 bereitgestellt wird, wieder abgeführt.

Das Pumpengehäuse 2 ist von einem Deckel 7 seitlich verschlossen, wobei in den Deckel 7 ein Durchbruch eingearbeitet ist, durch den die Pumpenwelle 3 mit einem Teilabschnitt aus dem Pumpeninnenraum des Pumpengehäuses 2 herausragt. Dieser aus dem Pumpeninnenraum herausragende Teilbereich der Pumpenwelle 3 kann mit einer Keilverzahnung 8 versehen sein oder aber in herkömmlicher Weise mit einem Konus versehen sein, in den eine Nut zur Aufnahme eines Passstiftes eingearbeitet sein kann.

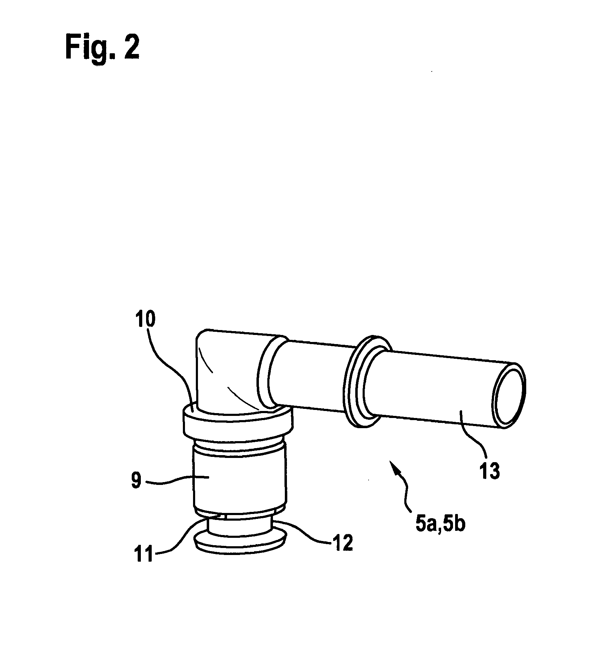

Ausweislich der Fig. 2 ist ein hier als 90° Winkelstutzen ausgebildeter Stutzen 5a, 5b in eine Hülse 9 eingespritzt. Die Hülse 9 ist aus einem metallischen Werkstoff, beispielsweise Aluminium, gefertigt, während der Stutzen aus Kunststoff oder einem Faser-Kunststoff-System hergestellt ist. Die Hülse 9 weist einen Einpressbund 10 auf, an den ein geeignetes Einspresswerkzeug zum Einpressen des Verbundes aus dem Stutzen 5a, 5b und der Hülse 9 in eine Zulauföffnung bzw. eine Rücklauföffnung der Hochdruckpumpe 1 angreifen kann. Gegenüberliegend zu dem Einpressbund 10 weist die Hülse 9 Quernuten 11 auf, die bei dem Einspritzvorgang des Stutzens 5a, 5b mit Kunststoff ausgefüllt werden und somit eine verdrehsichere Verbindung der Hülse 9 und des Stutzens 5a, 5b gewährleisten. In den anschließenden endseitigen Bereich des Stutzens 5a, 5b ist eine umlaufende Nut 12 eingelassen, in die ein Dichtring, beispielsweise ein Runddichtring, eingesetzt wird. Dieser Dichtring dient zur zuverlässigen Abdichtung des Stutzens 5a, 5b gegenüber der Zulauföffnung bzw. Rücklauföffnung in der Hochdruckpumpe 1. Die Pressverbindung ist so ausgelegt, dass der Stutzen 5a, 5b verdrehsicher in der Zulauföffnung beziehungsweise der Rücklauföffnung festgelegt ist.

Der zweite Schenkel des Stutzens 5a, 5b weist eine Kundenschnittstelle 13 zum Anschluss der Zulaufleitung oder der Rücklaufleitung zur Verbindung mit dem weiteren Kraftstoffeinspritzsystem auf.

## Patentansprüche

1. Pumpe, insbesondere für ein Kraftstoffeinspritzsystem einer Brennkraftmaschine, die mit einem Hochdruckbereich und einem Niederdruckbereich verschaltet ist,
wobei der Niederdruckbereich eine Zulaufleitung und eine Rücklaufleitung aufweist, die über Stutzen (5a, 5b) mit der Pumpe (1) verschaltet sind, wobei die Stutzen (5a, 5b) in je eine Zulauföffnung und eine Rücklauföffnung an der Pumpe (1) dichtend eingesetzt sind, und wobei die Stutzen (5a, 5b) aus einem Kunststoff gefertigt sind, **dadurch gekennzeichnet, dass** der Stutzen (5a, 5b) in dem in die Zulauföffnung und/oder die Rücklauföffnung eingesetzten Bereich von einer aus einem metallischen Werkstoff gefertigten Hülse (9) umgeben ist und dass zwischen dem Stutzen (5a, 5b) und der Hülse (9) eine Verdrehsicherung angeordnet ist.

2. Pumpe nach Anspruch 1, **dadurch gekennzeichnet, dass** der Stutzen (5a, 5b) in die Hülse (9) eingespritzt ist.

3. Pumpe nach Anspruch 1 oder 2, **dadurch gekennzeichnet, dass** die Hülse (9) eine Metallhülse ist.

4. Pumpe nach einem der vorherigen Ansprüche, **dadurch gekennzeichnet, dass** die Hülse (9) einen Einpressbund (10) aufweist.

5. Pumpe nach einem der vorherigen Ansprüche, **dadurch gekennzeichnet, dass** der Stutzen (5a, 5b) und/oder die Hülse (9) in dem in die Öffnung eingesetzten Bereich eine Ringnut (12) zur Aufnahme eines Dichtrings aufweist.

6. Pumpe nach einem der vorherigen Ansprüche, **dadurch gekennzeichnet, dass** die Verdrehsicherung eine Verzahnung aufweist.

7. Pumpe nach einem der vorherigen Ansprüche, **dadurch gekennzeichnet, dass** die Verdrehsicherung zumindest eine Quernut (11) aufweist.

8. Pumpe nach einem der vorherigen Ansprüche, **dadurch gekennzeichnet, dass** der Stutzen (5a, 5b) auf der der Hülse (9) abgewandten Seite eine Kundenschnittstelle (13) aufweist.

## Claims

1. Pump, in particular for a fuel injection system of an internal combustion engine, said pump being connected to a high-pressure region and to a low-pressure region, wherein the low-pressure region has a feed line and a return line that are connected to the pump (1) by way of connectors (5a, 5b), wherein the connectors (5a, 5b) are sealingly inserted into, respectively, a feed opening and a return opening on the pump (1), and wherein the connectors (5a, 5b) are manufactured from a plastic, **characterized in that** the connector (5a, 5b), in the region inserted into the feed opening and/or the return opening, is surrounded by a sleeve (9) manufactured from a metallic material, and **in that** a rotation prevention means is arranged between the connector (5a, 5b) and the sleeve (9).

2. Pump according to Claim 1, **characterized in that** the connector (5a, 5b) is injection-moulded into the sleeve (9).

3. Pump according to Claim 1 or 2, **characterized in that** the sleeve (9) is a metal sleeve.

4. Pump according to one of the preceding claims, **characterized in that** the sleeve (9) has a press-in collar (10).

5. Pump according to one of the preceding claims, **characterized in that** the connector (5a, 5b) and/or the sleeve (9) has, in the region inserted into the opening, an annular groove (12) for receiving a sealing ring.

6. Pump according to one of the preceding claims, **characterized in that** the rotation prevention means has a toothing.

7. Pump according to one of the preceding claims, **characterized in that** the rotation prevention means has at least one transverse groove (11).

8. Pump according to one of the preceding claims, **characterized in that** the connector (5a, 5b) has a customer interface (13) on the side remote from the sleeve (9).

## Revendications

1. Pompe, en particulier pour un système d'injection de carburant d'un moteur à combustion interne, qui est connectée à une région haute pression et à une région basse pression, la région basse pression comprenant une conduite d'alimentation et une conduite de retour qui sont connectées à la pompe (1) par le biais de tubulures (5a, 5b), les tubulures (5a, 5b) étant respectivement insérées de manière étanche dans une ouverture d'alimentation et une ouverture de retour sur la pompe (1), et les tubulures (5a, 5b) étant fabriquées en un plastique, **caractérisée en ce que** la tubulure (5a, 5b), dans la région insérée dans l'ouverture d'alimentation et/ou l'ouverture de retour, est entourée d'une douille (9) fabriquée en un matériau métallique, et **en ce qu'**une fixation anti-rotation est disposée entre la tubulure (5a, 5b) et la douille (9).

2. Pompe selon la revendication 1, **caractérisée en ce que** la tubulure (5a, 5b) est moulée par injection dans la douille (9).

3. Pompe selon la revendication 1 ou 2, **caractérisée en ce que** la douille (9) est une douille métallique.

4. Pompe selon l'une quelconque des revendications précédentes, **caractérisée en ce que** la douille (9) comprend une collerette d'enfoncement (10).

5. Pompe selon l'une quelconque des revendications précédentes, **caractérisée en ce que** la tubulure (5a, 5b) et/ou la douille (9) présente(nt), dans la région insérée dans l'ouverture, une rainure annulaire (12) pour recevoir une bague d'étanchéité.

6. Pompe selon l'une quelconque des revendications précédentes, **caractérisée en ce que** la fixation anti-rotation comprend une denture.

7. Pompe selon l'une quelconque des revendications précédentes, **caractérisée en ce que** la fixation anti-rotation comprend au moins une rainure transversale (11).

8. Pompe selon l'une quelconque des revendications précédentes, **caractérisée en ce que** la tubulure (5a, 5b) présente, sur le côté opposé à la douille (9), une interface client (13).
